# EUROPEAN PATENT SPECIFICATION

(11) **EP 3 483 995 B1**
(45) Date of publication and mention of the grant of the patent: **21.09.2022**
(21) Application number: 17201616.4
(22) Date of filing: 14.11.2017
(51) Int. Cl.: H02B 13/045, H02B 1/56

(54) **MEDIUM VOLTAGE GAS INSULATED SWITCHGEAR WITH PRESSURE REINFORCED COMPARTMENT**
GASISOLIERTE MITTELSPANNUNGSSCHALTANLAGE MIT DRUCKVERSTÄRKTEM GEHÄUSE
APPAREILLAGE DE COMMUTATION DE TENSION MOYENNE À ISOLATION GAZEUSE COMPORTANT UN COMPARTIMENT RENFORCÉ SOUS PRESSION

(43) Date of publication of application: 15.05.2019
(73) Proprietor: ABB Schweiz AG, 5400 Baden (CH)
(72) Inventor: Gentsch, Dietmar, 40882 Ratingen (DE); Kopp, Dalibor, 613 00 Brno (CZ); Reuber, Christian, 47877 Willich (DE)
(74) Representative: Maiwald Patent- und Rechtsanwaltsgesellschaft mbH

(56) References cited:
- EP-A1- 0 871 269
- EP-A1- 1 211 771
- EP-A1- 1 237 246
- WO-A1-2010/142302
- DE-A1- 2 610 309
- DE-C1- 4 107 725
- DE-U1- 29 912 027
- JP-A- H03 295 212

## Description

The invention relates to a Medium voltage gas insulated switchgear with pressure consolidated compartment, with three phase switch with movable contacts, gearbox and bushings, wherein the switchgear is provided with a further inner compartment, containing the switches and the gearbox, which is constructed gas and pressure tight versus the remaining other housing of the switchgear, according to the features of the preamble of claim 1.

For medium voltage gas insulated switch gears GIS, it is well known, that the insulating gas in the switchgear compartment is used at relatively low pressures, that means, some few hundred mbar above environmental pressure. Such insulating gas can be dry air, N2 or SF6, depending on the nominal voltage and the desired overall dimensions of the switchgear. The compartments of said GIS can then have a simple, rectangular shape. Additional profiles are being used, in some cases to reinforce the structure, to avoid bulging of the side walls of the compartment due to the pressure of the gas, that was filled into the compartment.

EP1211771A1 discloses a gas-insulated switchgear according to the preamble of claim 1.

Well known medium voltage GIS compartments are not suitable for the use of insulating gases at higher pressures, e.g. mixtures with fluoroketones at higher pressures than the state of the art or dry air at a pressure of about 3 bar. The bulging of the structure would be excessive. If the thickness of the steel walls of the compartments would be increased to reduce the bulging, the material costs would strongly increase.

So the object of the invention is, to realize higher insulation gas pressures, by a reduced need of material for the compartment.

This is solved by the invention defined by the features of claim 1.

Further advantageous embodiments are given by the depending claims 2 to 6.

Subject of the invention is that the compressive strengthening of the aforesaid inner compartment is realized by integrated wall structures, by the use of metal sheets with integral corrugations and edges with large radii.

In a further advantageous embodiment, the corrugations are oriented in parallel to the long axis, wherein the long axis is the moving axis of the movable contacts.

According to the invention, the combination of stiffening structuring of the wall in addition with a rectangular stiffening via the traverse or gearbox, result in combination to an enhanced pressure stability, by the use of reduced material.

According to the invention, the support element, or as further stiffening element, can be the aforesaid gearbox directly fixed with the wall of the inner compartment.

So the invention proposes:
- to use metal sheets with corrugations and edges with large radii for the walls of the compartment and
- to use the devices that are anyway required inside the compartment, e.g. circuit breakers, as a reinforcement means for the compartment.

An advantageous embodiment of the invention is shown in the figures:
Figure 1: Exemplary gas insulated (GIS) circuit breaker compartment 1
Figure 2: Top view
Figure 3: Front view
Figure 4: Alternative way of shaping
Figure 5: Optional heat sinks
Figure 6: Optional sandwich structure
Figure 7: Thermosiphon cooling

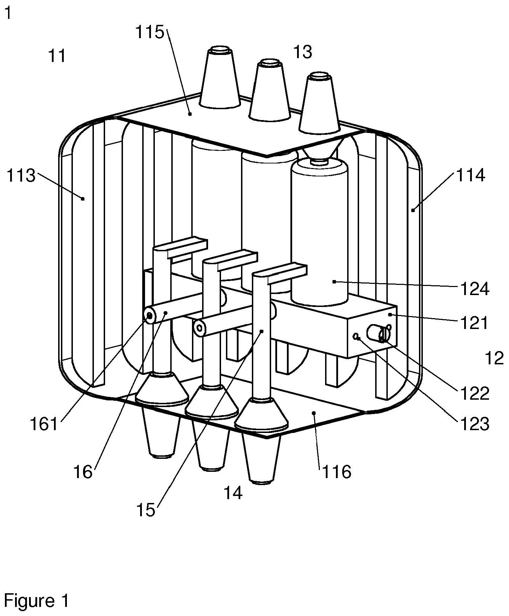

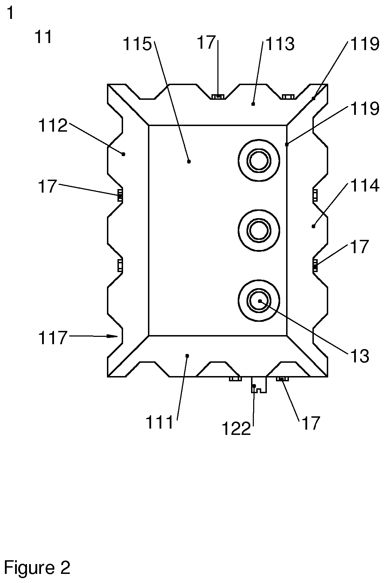

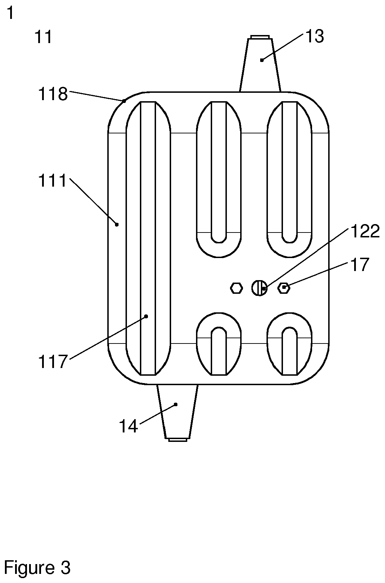

Figure 1 shows an exemplary gas insulated (GIS) circuit breaker compartment 1 according to the present invention with removed front wall 111 and removed left side wall 112, so that the internal components are visible; Figure 2 shows a top view; Figure 3 a front view.

The enclosure 11 is composed of metallic walls 111-116, preferably made of non-ferromagnetic stainless steel. These metallic walls shall have corrugations 117 and relatively large radii 118 to increase their mechanical stiffness. The radius 118 shall be larger than the usual bending radius of the sheet metal processing, and it shall be small enough not to constraint the devices that are inside the compartment, like the circuit breaker 12, or the interfaces, like the bushings 13, 14. Values for these radii are between 1cm and 30cm.

The arrangement of corrugations and radii is advantageous when the resulting welding lines are straight and short.

Furthermore, the corrugations can go inside the radii to reinforce the structure and keep the channels for the natural ventilation open at the outside of a compartment and between several compartments.

In the example shown in Figures 1-3 the compartment 11 consists of 6 separate walls that are connected by welding. It is further possible and advantageous to manufacture more than one wall in one piece. Then the connection between adjacent walls can be realised by bending the metal sheet.

For example, back wall 113 and top wall 115 can be manufactured in one piece. Back wall 113 and side wall 112 can also be manufactured in one piece, but only the linear section of their connecting edge can be bended; in the region where their radii meet welding will be required. The improved mechanical stiffness is not limited to the very wall where it is applied to.

Figure 2 shows that the length and width of the top wall 115 are shortened due to the fact the adjacent walls have large bending radii, and shorter width and length already result in an increased mechanical stiffness, even when the top wall 115 does not show any corrugations or radii in this example. Certainly it is also possible to add corrugations to the top wall 115 or to the bottom wall 116 in case of need.

A further aspect of the corrugations is that they can improve the stream of cooling air along the outside of the compartment when the corrugations are arranged in a vertical manner and no obstacles block the flow of air.

This can especially be seen in Figure 2.

The room that the corrugations form between adjacent compartments can also be used for guiding the released gases in case of internal arcing. The required means for a controlled pressure release in case of a failure are not shown here. The corrugations 117 can either be directed towards the inside the compartment, as shown in the Figures 1-3, or to the outside (not shown).

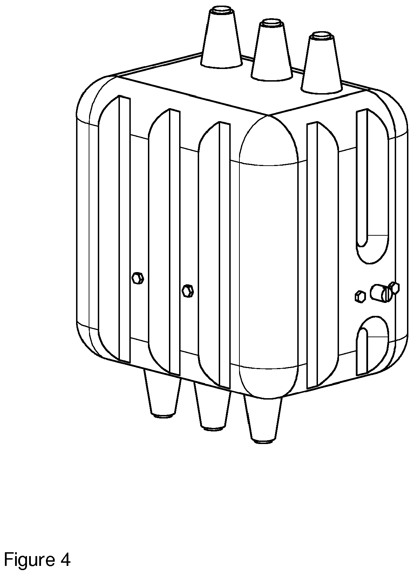

Figure 4 shows an alternative way of shaping the connection between the front / back wall and the side walls. As here also large bending radii are being used, the mechanical stress to the connections of the walls is reduced.

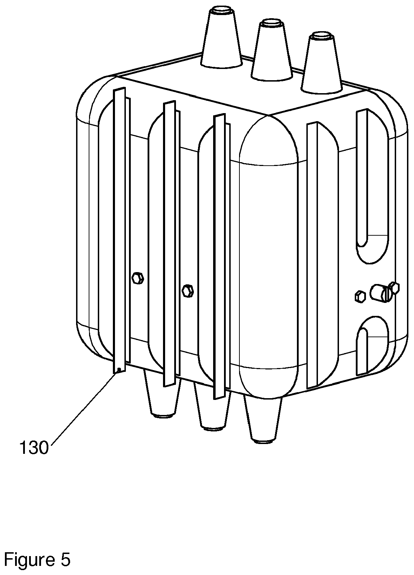

Figure 5 shows how additional heat sinks can be added to the corrugations, e.g. by spot welding of a simple piece of sheet metal 130. The transfer of heat from the compartment to the stream of cooling air at the outside of the compartment is supported by an increased surface. As warm air has a lower density than cold air, surrounding air will flow from the bottom to the top of the compartment along the vertical corrugations and the heat sink.

Heat sinks may be added at any place at the outside of the compartment, wherever it is useful for the effective cooling of the panel, i.e. at one or more side walls and at the impressed areas of the wall - as shown in figure 5 - and / or at the salient areas of the wall.

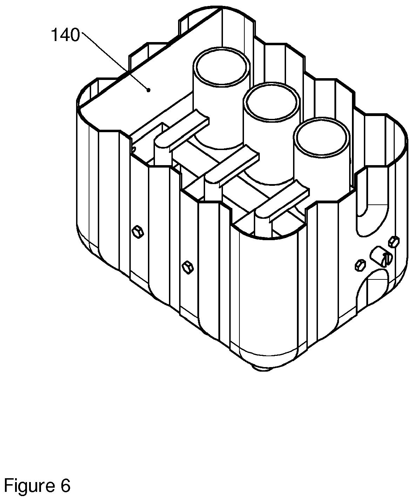

Figure 6 shows how a side wall - here as an example the back wall 113 - can be equipped with an additional sandwich wall 140. This will result in two advantages - first, the mechanical stiffness is remarkably increased when the sandwich wall ist firmly connected to the side wall, e.g. by welding spots distributed on all the areas where the two walls touch.

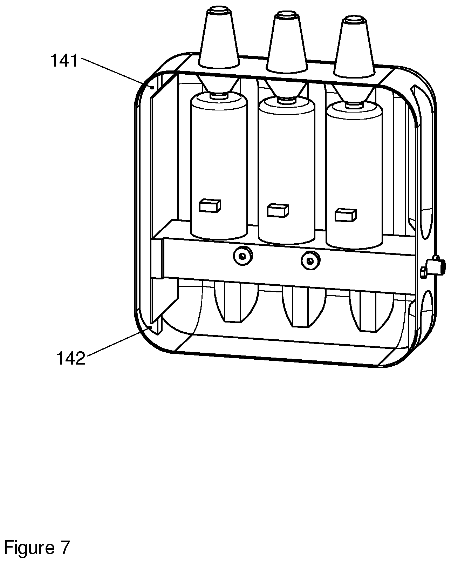

The second advantage is the thermosiphon cooling effect inside the compartment due to the chimney that has been build when the sandwich plate 140 leaves openings 141, 142 at its upper and lower end, as shown in figure 7, where the insulating gas inside the compartment can run between the side wall and the sandwich wall. The warmest gas inside the compartment is where the heat or electrical losses are being generated, i.e. in the center where the conductors are. The coldest gas is at the side walls, where the surrounding air is cooling the compartment. As the density of cold insulating gas is lower than the density of warm insulating gas, the gas will fall down inside said chimneys between the side walls and the sandwich walls as it is being cooled there. This falling gas will enhance the circulation of insulating gas inside the compartment so that the heat is transported more effectively to the outside of the compartment. Consequently, the compartment can carry higher nominal currents.

The corrugated walls 111-116 can preferably be made by mechanical pressing, deep drawing or by hydroforming.

Further, it can be advantageous to make the walls 111-116 from tailored blaks, so that certain areas of the wall can have different material properties, e.g. sheets with higher stiffness for local reinforcement or regions with improved weldability.

The second key aspect of this invention is the usage of the compartment internal devices for the reinforcement of the compartment.

The idea is that at least one mechanical reinforcement is provided by the internal device, e.g. the circuit breaker 12, in at least one of the three spatial directions, to limit bulging of the compartment in any direction.

In the shown example, front wall 111 and back wall 113 shall be mechanically connected by the gearbox 121 of the circuit breaker 12. Fixation means 123 shall be foreseen in the gearbox 121 where it touches the front wall 111 and the back wall 113.

Due to this connection, the bulging of the walls 111 and 113 will be strongly reduced when the compartment is pressurised.

Top wall 115 and bottom wall 116 shall be mechanically connected by the top bushings 13, the switching poles 124, the gearbox 121, the conductors 15 and the bottom bushings 14. The circuit breaker 12 is to be designed in a way that the corresponding forces can be borne.

Due to this connection, the bulging of the walls 115 and 116 will be strongly reduced when the compartment is pressurised.

The side walls 112, 114 shall be mechanically connected by the gearbox 121 and by mechanical supports 16 with fixation means 161 that connect both side walls to the gearbox. Depending on their position inside the compartment, these supports can be conductive or have to be insulating. In the shown example, the supports that connect the gearbox to the right side wall 114 (supports not shown) can be conductive, while the supports that connect the gearbox to the left side wall 112 will generally have to be insulating as they pass between the conductors of two phases.

Due to this connection, the bulging of the walls 112 and 114 will be strongly reduced when the compartment is pressurised.

The mentioned fixation means 123, 161 together with the fixation means 17 can e.g. be inside threads 123, 161 for inserting screws 17 to build a fixed structure of wall, internal parts and opposing wall.

Certainly, it has to be considered that this screw connection through the enclosure does not jeopardise the gas tightness of the enclosure. E.g. sealings can be used here, or the heads of the screws can be welded to the walls in a gas-tight manner after insertion.

Said fixations do not necessarily require an opening in the walls. Depending on the sequence of assembly, accessible connections can be fixed before the final closure of the compartment. A threaded stud can then be welded to the inside of the wall.

The shown example includes a massive gearbox running through the entire compartment, therefore it is advantageous to exploit this box for the reinforcement structure. In other compartments without this gearbox or alike devices, it may be advantageous to use a mechanical support like part 16, but directly between two opposing walls (not shown).

The figures show a compartment for a CB as an example. Certainly, the ideas of this invention are also generally usable for all kinds of compartments, e.g. for compartments with three position switches.

### Reference signs

- 1: Gas insulated circuit breaker compartment
- 11: Enclosure
- 12: Circuit Breaker (without drive - drive is external to the compartment)
- 13: Top bushings
- 14: Bottom bushings
- 15: Conductors
- 16: Mechanical supports
- 17: Fixation means
- 111: Front wall
- 112: Side wall left
- 113: Back wall
- 114: Side wall right
- 115: Top wall
- 116: Bottom wall
- 117: Corrugation
- 118: Radius
- 119: Welding line
- 121: Gearbox
- 122: Drive shaft to mechanically couple the external drive
- 123: Fixation means
- 124: Switching poles
- 130: Heat sink
- 140: Sandwich wall
- 141: Upper opening between side wall and sandwich wall
- 142: Lower opening between side wall and sandwich wall
- 161: Fixation means

## Claims

1. Medium voltage gas insulated switchgear with an inner compartment (1) reinforced against pressure containing one, two or three phase switches (124),
wherein the inner compartment is constructed gas and pressure tight versus the remaining other housing of the switchgear;
wherein, walls (111-116) of the inner compartment are formed from meta sheets with integral corrugations (117) and edges, **characterised in that** the edges have large radii (118) between 1 cm and 30 cm, and **in that** the inner compartment is further reinforced with an internal support element that is oriented perpendicularly to the integral corrugations, mechanically connecting one wall (111) with another wall (113), wherein the support element is a gearbox (121) or another part of a frame for the one, two or three phase switches, directly fixed with the two walls and (111, 113) of the inner compartment.

2. Medium voltage gas insulated switchgear, according to claim 1, wherein, the integral corrugations are oriented parallel to a moving axis of movable contacts of the one, two or three phase switches.

3. Medium voltage gas insulated switchgear, according to one of the preceeding claims, wherein, the metal sheets with corrugations were produced by the use of hydroforming technology.

4. Medium voltage gas insulated switchgear, according to one of the preceeding claims, wherein, the metal sheets with corrugations consist of tailored blanks.

5. Medium voltage gas insulated switchgear, according to one of the preceeding claims, wherein, at least one of the metal sheets with corrugations of the inner compartment has a flat sandwich wall (140) mounted adjacent to it internally within the inner compartment to provide an overall wall construction comprising a sandwich profile.

6. Medium voltage gas insulated switchgear, according to one of the preceeding claims, wherein heat sinks (130) are added to the corrugations.

## Patentansprüche

1. Gasisolierte Mittelspannungsschaltanlage mit einem gegen Druck verstärkten Innenraum (1), der ein-, zwei- oder drei-phasige Schalter (124) enthält,
wobei der Innenraum im Gegensatz zu dem restlichen anderen Gehäuse der Schaltanlage gas- und druckdicht konstruiert ist;
wobei Wände (111-116) des Innenraums aus Metallblechen mit integralen Riffelungen (117) und Kanten ausgebildet sind,
**dadurch gekennzeichnet, dass** die Kanten große Radien (118) zwischen 1 cm und 30 cm aufweisen, und dadurch, dass
der Innenraum ferner mit einem internen Stützelement verstärkt ist, das senkrecht zu den integralen Riffelungen ausgerichtet ist, das eine Wand (111) mit einer anderen Wand (113) mechanisch verbindet, wobei
das Stützelement ein Getriebe (121) oder ein anderer Teil eines Rahmens für die ein-, zwei- oder drei-phasigen Schalter ist, das direkt an den zwei Wänden (111, 113) des Innenraums befestigt ist.

2. Gasisolierte Mittelspannungsschaltanlage nach Anspruch 1, wobei die integralen Riffelungen parallel zu einer sich bewegenden Achse von beweglichen Kontakten der ein-, zwei- oder drei-phasigen Schalter ausgerichtet sind.

3. Gasisolierte Mittelspannungsschaltanlage nach einem der vorhergehenden Ansprüche, wobei die Metallbleche mit Riffelungen unter Verwendung einer Hydroforming-Technologie hergestellt wurden.

4. Gasisolierte Mittelspannungsschaltanlage nach einem der vorhergehenden Ansprüche, wobei die Metallbleche mit Riffelungen aus zugeschnittenen Rohlingen bestehen.

5. Gasisolierte Mittelspannungsschaltanlage nach einem der vorhergehenden Ansprüche, wobei mindestens eines der Metallbleche mit Riffelungen des Innenraums eine flache Sandwichwand (140) aufweist, die angrenzend daran im Inneren des Innenraums montiert ist, um eine Wandgesamtkonstruktion bereitzustellen, die ein Sandwichprofil aufweist.

6. Gasisolierte Mittelspannungsschaltanlage nach einem der vorhergehenden Ansprüche, wobei Wärmesenken (130) zu den Riffelungen hinzugefügt sind.

## Revendications

1. Appareillage de commutation moyenne tension à isolation gazeuse avec un compartiment intérieur (1) renforcé contre la pression contenant des commutateurs monophasés, biphasés ou triphasés (124),
le compartiment intérieur étant construit de manière à être étanche aux gaz et à la pression par rapport au reste du boîtier de l'appareillage de commutation ;
les parois (111-116) du compartiment intérieur étant formées à partir de tôles avec des ondulations (117) et des bords intégrés, **caractérisé en ce que** les bords ont de grands rayons (118) entre 1 cm et 30 cm, et **en ce que** le compartiment intérieur est en outre renforcé avec un élément de support interne qui est orienté perpendiculairement aux ondulations intégrées, la reliant mécaniquement une paroi (111) avec une autre paroi (113), l'élément de support étant une boîte de vitesses (121) ou une autre partie d'un cadre pour les commutateurs monophasés, biphasés ou triphasés, directement fixée avec les deux parois (111, 113) du compartiment intérieur.

2. Appareillage de commutation moyenne tension à isolation gazeuse, selon la revendication 1, les ondulations intégrées étant orientées parallèlement à un axe de déplacement des contacts mobiles des commutateurs monophasés, biphasés ou triphasés.

3. Appareillage de commutation moyenne tension à isolation gazeuse, selon l'une des revendications précédentes, les tôles avec des ondulations ayant été produites par l'utilisation de la technologie d'hydroformage.

4. Appareillage de commutation moyenne tension à isolation gazeuse, selon l'une des revendications précédentes, les tôles avec des ondulations étant constituées d'ébauches sur mesure.

5. Appareillage de commutation moyenne tension à isolation gazeuse, selon l'une des revendications précédentes, au moins l'une des tôles avec des ondulations du compartiment intérieur ayant une paroi en sandwich plate (140) montée adjacente à elle à l'intérieur du compartiment intérieur pour fournir une construction de paroi globale comprenant un profil en sandwich.

6. Appareillage de commutation moyenne tension à isolation gazeuse, selon l'une des revendications précédentes, des dissipateurs thermiques (130) étant ajoutés aux ondulations.
